# EUROPEAN PATENT APPLICATION

(11) **EP 2 532 917 A1**
(43) Date of publication of application: **12.12.2012**
(21) Application number: 11739421.3
(22) Date of filing: 01.02.2011
(51) Int. Cl.: F16D 69/04

(54) **PROCESS FOR PRODUCING BRAKE LININGS**

(30) Priority: 02.02.2010 ES 201000112
(71) Applicant: TRW Automotive España, S.L., 31012 Pamplona (Navarra) (ES)
(72) Inventor: AZANZA MORIONES, Ignacio, E-31006 Pamplona (Navarra) (ES); PEREDA RUIZ, Antonio, E-26540 Alfaro (La Rioja) (ES)
(74) Representative: Intès, Didier Gérard André
(86) International application number: PCT/ES2011/000020
(87) International publication number: WO 2011/095657

(57) **Abstract**

The present invention relates to a process for producing brake linings, according to which the metal supporting means (1) and the friction material block which form the brake lining are attached by means of a powdered adhesive (3) which is deposited on the metal supporting means (1) by passing through an electrostatic unit (5), heating (4) which melts the resins of said adhesive (3) is then carried out so that the adhesive adheres to the metal supporting means (1).

## Description

### Field of the Art

The present invention relates to brake linings, proposing a production process which allows integrating the component parts of said brake linings in the constructive unit thereof without pollutant emissions into the atmosphere and with very satisfactory structural and economic results.

### State of the art

Brake linings usually comprise a metal support and a friction material block, the attachment between both components being fundamental so that the brake lining adequately meets the specifications necessary for the function of its application.

In this sense, several solutions are known for attaching the friction material and the metal support in the constructive formation of brake linings, the most common solution comprising shot blasting one face of the metal support, where an adhesive intended for fixing the friction material on said metal support is then applied, such that a roughness favouring the fixing of the adhesive is achieved on the surface of the metal support with the shot blasting.

The most common adhesive among those used for fixing is obtained from phenolic resins and resols compatible with the resins forming part of the friction material, said phenolic resins and resols being dissolved in solvents, for example chlorinated solvents, such as toluene, trichloro, dichloro, etc., such that that solution is sprayed on the metal support, heating for evaporating the solvent then being carried out and the metal support is left to settle in those conditions until the adhesive reaches the state suitable for fixing the friction material.

The friction material in formed prior to the fixing on the metal support, forming a block called a pre-mould with said friction material by means of beating the components of that friction material for mixing them together, which are then cold-pressed forming the pre-mould which is arranged on the corresponding metal support when the resin applied thereon is dry. Therefore, the resin components of the friction material and the resin applied on the metal support are liquefied by means of pressure and temperature, whereby those resins melt together, which determines the fixing of the friction material on the metal support.

This conventional solution of attaching the friction material and the metal support of the brake linings has the drawback that chlorinated solvents are carcinogenic for human beings and they also produce volatile organic compounds, such that their evaporation causes serious environmental pollution problems.

For that reason the use of solvents such as propane dichloride which is not carcinogenic has been resorted to, but it continues to cause environmental pollution problem.

To prevent pollution solutions aimed at capturing the evaporation of the solvent from the resin which is applied on the metal support of the brake linings have been developed, such that with that capture pollutant emissions into the atmosphere are prevented. However, these solutions are very costly and complex.

Another known alternative is the use of alcohol as a resin dissolving medium, capturing the alcohol when it evaporates to prevent its dispersion into the atmosphere, and then burning it, which alternative is also a complex solution that further generates alcohol residues which upon being burned also produced volatile organic compounds, in turn causing certain pollution.

The use of adhesives using water as a solvent is also know, but the adherence achieved with these adhesives between the metal support and the friction material of the brake linings is not as effective as that achieved with the other described solutions, which means that this solution is rather impractical, since the attachment between the metal support and the friction material is the most significant attachment of a brake lining because the detachment of the friction material may have serious consequences on the use of application of the brake lining.

The use of adhesives formed by phenolic resins and resols dissolved in a liquid solvent as a medium to enable applying the adhesive by spraying on the metal support of the brake linings further entails other additional problems, since if the resin and solvent mixture is very liquid, a high evaporation and subsequently a significant pollution occurs, whereas if the amount of solvent is reduced, the mixture ends up with a degree of viscosity which makes spraying difficult, therefore the application must be done with a roller which requires solutions of more complex embodiment.

On the other hand, it must be taken into account that the resin components of the friction material of the brake linings are organic resins, such that when the brake lining heats up in the braking of application, said resins of the friction material burn whereby the intensity of the braking decreases. However, it is convenient to have a sufficient amount of resin to achieve a good adherence between the friction material and the metal support of the brake linings. A known solution for combining these two conditions is to make the friction material with two different mixtures, one with a higher percentage of resin in the area for fixing to the metal support, and another with a lower percentage of resin in the rest of the friction material, so that the braking characteristics are better. Nevertheless, this solution has the same drawbacks in terms of the solvent of the resin for fixing on the metal support as the solutions mentioned previously.

### Object of the Invention

With respect to all these drawbacks in the known solutions for producing brake linings, the present invention proposes a process whereby the adhesive for fixing the friction material of the brake linings is applied in a powdery form, such that no dissolvent evaporation occurs in the application.

According to this process of the invention, the powdered adhesive is deposited on the metal support of the brake lining to be formed and, in a subsequent phase, said powdered adhesive is heated in a range of temperature which allows resin or resins forming part of the powdered adhesive to reach their liquid state in order to be fixed on the metal support, but without reaching the temperature at which said resins become permanently hardened.

Once the adhesive is fixed on the metal support, the pre-mould of the friction material is incorporated thereon following the process of the conventional solutions for forming said friction material block.

The powdered adhesive can be deposited on the metal support simply by gravity, providing the powdered adhesive with an electrostatic charge which allows securing the powdered adhesive on its own on the metal support being further envisaged, facilitating the process for fixing the friction material.

Therefore, this process for the invention prevents the use of carcinogenic solvents, eliminating emissions of evaporation to the atmosphere and subsequently eliminating environmental pollution; all this with a solution which is, at the very least, as constructively simple to carry out as the applications by spraying the adhesives with liquid solvent.

On the other hand, in the conventional solutions of application by spraying adhesives with liquid solvents, only an amount of the order of 25% of the sprayed adhesive is deposited on the metal support, the rest being dispersed without being able to be recovered; whereas with the application of powdered adhesive according to the invention, the amount of adhesive which is deposited on the metal support of application is improved and, furthermore, the powder which is not deposited on the metal support can be recovered for reuse, a considerable reduction in adhesive consumption thus being achieved.

As a result, the process of the invention certainly has advantageous features, acquiring own identity and character preferred for the constructive application of the brake linings in said process which it is intended.

### Description of Drawings

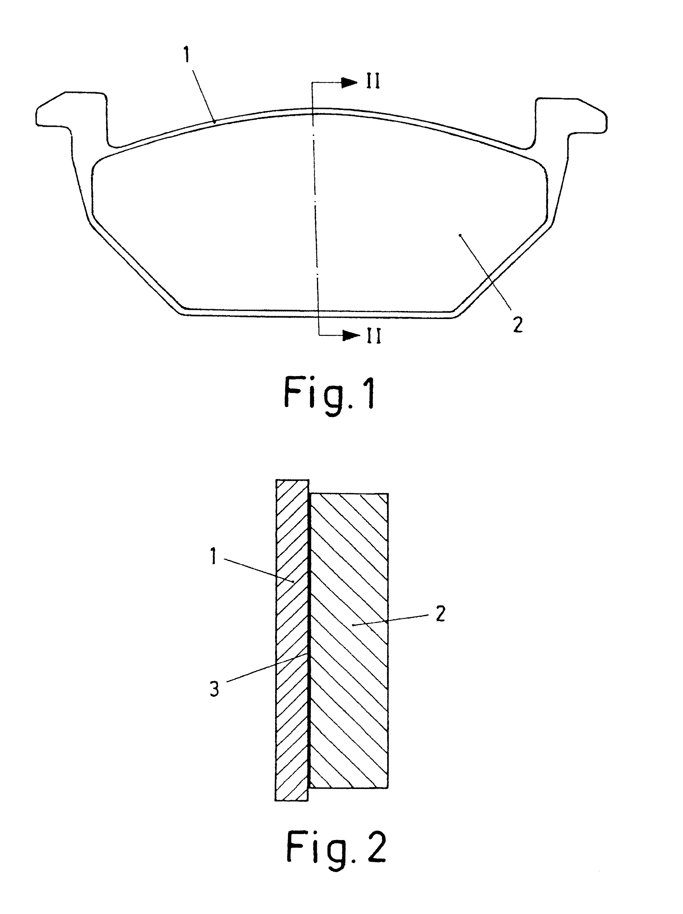

Figure 1 shows an example of a conventional brake lining.
Figure 2 is an enlarged view of section II-II indicated in the preceding figure.

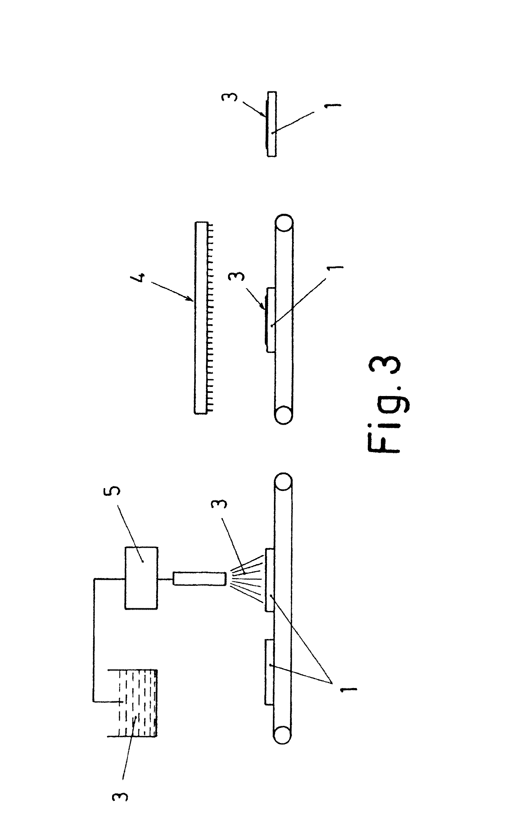

Figure 3 is a diagram of the process for applying adhesive on the metal support of a brake lining according to the invention.

### Detailed Description of the Invention

The object of the invention relates to a process for producing brake linings comprising a metal support (1) and a friction material block (2) with an adhesive (3) rigidly attaching both elements.

According to the proposed process, a powdered adhesive (3) which is deposited on the metal support (1) is used for attaching the metal support (1) and the friction material block (2), heating (4) which melts the resin components of the powdered adhesive (3) is then carried out such that the adhesive is fixed on the metal support (1).

The heating of the powdered adhesive for melting the resins thereof can be performed, for example, without limitation, by means of infrared radiations, said heating being performed until a range of temperature which allows the melting of the resins for fixing to the metal support, but without reaching the critical temperature at which said resins harden permanently.

The metal support and the adhesive (3) are thus attached in conditions which allows incorporating the friction material block (2) according to the conventional method, i.e., with pressure and temperature, so that the resins forming part of said friction material block (2) and the component resin of the powdered adhesive (3) melt together, the attachment of the friction material block (2) on the metal support (1) thus being established.

The application of the powdered adhesive (3) on the metal support (1) is carried out by passing the powdered adhesive (3) through an electrostatic unit (5), where said powdered adhesive (3) acquires an electrostatic charge, through which it is secured on the metal support (1) such that it facilitates the subsequent operations of fixing the friction material block (2).

If the powdered adhesive (3) is secured strongly enough on the metal support (1) through the electrostatic charge, heating for melting the resins of the powdered adhesive (3) in the deposition on the metal support (1) can even be dismissed, since the function of said heating is only so that the resins of the powdered adhesive (3) acquire a molten state which allows adhering on the metal support (1) to perform the operations of fixing the friction material block (2).

It has been envisaged that the parts of the metal support (1) in which the powdered adhesive (3) must not be deposited and which, however, are exposed to receive the adhesive, are protected by means of a prior coating which prevents the adhesive (3) from adhering due to electrostatic effect.

In any case, with the use of the powdered adhesive (3), exempt from liquid solvent, the pollutant evaporations are prevented in brake lining production; whereas the powdered adhesive (3) which is not fixed on the metal support (1) of application can be collected for reuse in a subsequent application, utilisation of practically all the adhesive with subsequent economical advantage thus being achieved.

## Claims

1. A process for producing brake linings, for producing brake linings comprising a metal support (1) and a friction material block (2) formed by one or two mixtures with different amounts of resins, with rigid attachment between said metal support (1) and said friction material block (2) by means of an adhesive (3), **characterised in that** a powdered adhesive (3), which is deposited on the metal support (1), is used for attaching the friction material block (2) on the metal support (1), heating (4) which melts the resin components of said powdered adhesive (3) is then carried out for adhering it on the metal support (1).

2. The process for producing brake linings according to claim 1, **characterised in that** the heating (4) is carried out until a range of temperature melting the resin components of the powdered adhesive (3), but without reaching the critical hardening temperature of said resins.

3. The process for producing brake linings according to claim 1, **characterised in that** the powdered adhesive (3) is applied by passing through an electrostatic unit (5), wherein said powdered adhesive (3) acquires an electrostatic charge by which it is secured on the metal support (1) upon being deposited thereon.

4. The process for producing brake linings according to claim 1, **characterised in that** the powdered adhesive (3) which is applied and is not deposited on the metal support (1) is collected for reuse.

5. The process for producing brake linings according to claim 1, **characterised in that** the areas of the metal support (1) which do not have to receive powdered adhesive (3) are provided with a coating preventing the fixing of the powdered adhesive (3).
